# EUROPEAN PATENT APPLICATION

(11) **EP 1 562 196 A2**
(43) Date of publication of application: **10.08.2005**
(21) Application number: 05002406.6
(22) Date of filing: 04.02.2005
(51) Int. Cl.: G11B 23/40

(54) **Optical recording medium and method of recording an image**

(30) Priority: 05.02.2004 JP 2004029112
(71) Applicant: Fuji Photo Film Co., Ltd., Kanagawa (JP)
(72) Inventor: Shibata, Michihiro, Odawara-shi Kanagawa (JP); Kubo, Hiroshi, Odawara-shi Kanagawa (JP)
(74) Representative: HOFFMANN - EITLE

(57) **Abstract**

The present invention provides an optical recording medium, comprising a substrate; a recording layer formed on or above the substrate, which is capable of recording and reproducing information by irradiation with a laser beam; and an image-recording layer whereon a visible image is recordable, the image-recording layer being formed on the opposite side of the recording layer from the surface on which the irradiation with a laser beam is applied. The image-recording layer contains a dye as a primary component, which has an absorption maximum in a light wavelength region of 450 to 650 nm. The dye has an absorbance of 0.05 or more to at least one laser beam with a wavelength within any of the regions from 350 to 450 nm, from 600 to 700 nm, or from 750 to 850nm. The invention also provides a method of recording an image using the optical recording medium.

## Description

### BACKGROUND OF THE INVENTION

### Field of Invention

The present invention relates to an optical recording medium, and in particular to an optical recording medium that allows recording of a visible image on the surface opposite to a recording surface and an image-recording method for recording an image on the optical recording medium.

### Description of the Related Art

Optical recording media (optical disks) where information is recorded only once by laser beam irradiation are known. Such optical disks, often called recordable CD's (so-called CD-R), have a typical structure wherein a recording layer containing an organic dye, a light-reflectance layer of a metal such as gold, and a resin protective layer are formed on a transparent disk-shaped substrate in that order. Information is recorded on a CD-R by irradiation of a laser beam in the near-infrared region onto the CD-R (normally, laser beam at a wavelength of around 780 nm). In the irradiated area of the recording layer light is absorbed, there is a resulting localized increase in temperature, and this changes its physical and chemical properties (e.g., pit generation). Because of these physical and chemical changes the optical properties are changed and information can be recorded. Reading of the information (reproduction) is also carried out by irradiating with a laser beam having a wavelength the same as that of the recording laser beam. Information is reproduced by detecting the difference in reflectance between areas where the optical properties of the recording layer have been changed (recorded area) and areas where they are not changed (unrecorded area).

Recently, there is an increasing need for optical recording media higher in recording density. To satisfy this need, an optical disk called a Digital Versatile Disc (so-called DVD-R) has been proposed. The DVD-R has a structure wherein two discs, each consisting of a recording layer containing a dye, normally a light-reflectance layer over each recording layer, and also a protective layer as needed, are formed on transparent disk-shaped substrates. On the disk-shaped substrates there are guiding grooves (pregrooves) for tracking an irradiation laser beam, formed of a width of half or less (0.74 to 0.8 µm) of those of a CD-R. These two disks are laminated together, with an adhesive, on the recording layer side. Alternatively two disks of the above construction can be laminated together with a disc shaped protective layer laminated between them on the recording layer side. Recording and reproduction of information on and from the DVD-R are carried out by irradiation of a visible laser beam (normally, a laser beam having a wavelength in the range of 630 to 680 nm), and the recording density of a DVD-R can be made higher than that of a CD-R.

There are some known optical disks whereon a label is adhered onto the surface opposite to the recording surface. Such a label carries printed visible image information such as the song title of the audio data recorded on the recording surface, and other titles for identifying the recorded data, and the like. Such optical disks are prepared by printing the titles and the like on a circular label sheet by using, for example, a printer, and then affixing the label on the surface opposite to the recording surface of the optical disk.

However, as described above, preparation of an optical disk carrying a label, on which desired visible images such as title are recorded, demands a printer in addition to an optical disc drive. Accordingly, it requires the cumbersome procedure of recording information on the recording surface of an optical disk in an optical disk drive, then removing the optical disk from the optical disk drive, and affixing a label printed by a separate printer.

Under these circumstances, an optical recording medium that allows a display to be formed by altering the contrast between the surface opposite to the recording surface and the background by the use of a laser marker was proposed (see e.g., Japanese Patent Application Laid-Open (JP-A) No. 11-66617). By using this method, it becomes possible to record a desired image on the label surface of optical disc in an optical disk drive without the installation of a separate printer or the like. However, the method is lower in sensitivity and demands use of a high-power gas laser such as a carbon dioxide laser. The visible image formed by the laser beam above is also low in contrast and give inferior visibility.

If a light source identical to the laser source used in recording and reproduction of information (digital information) could be used for printing, general users would be able to print and display visual information using the same device as for recording. In addition, when image recording is performed by use of a laser beam, it is preferable, from the perspective of reducing the number of hardware resources in the recording device, to use the same laser source for recording and reproduction of information (digital information) as for image recording.

### SUMMARY OF THE INVENTION

The present invention has been accomplished in consideration of the above conventional problems. That is, the invention provides an optical recording medium that allows formation of a visible image with high contrast on an image-recording layer present on the surface opposite to the recording layer by using a laser beam. This invention also provides an image-recording method for recording an image on an image-recording layer of an optical recording medium that minimizes the need for hardware resources of a recording device, and allows general users to easily record an image by using a recording device.

That is, the invention provides an optical recording medium, comprising: a substrate; a recording layer formed on or above the substrate which is capable of recording and reproducing information by irradiation with a laser beam; and an image-recording layer whereon a visible image is recordable, the image-recording layer being formed on the opposite side of the recording layer from the surface on which the irradiation with a laser beam is applied, wherein the image-recording layer contains a dye as a primary component, having an absorption maximum in a light wavelength region of 450 to 650 nm, and an absorbance of 0.05 or more to at least one laser beam selected from the group consisting of laser beams having a wavelength in the regions from 350 to 450 nm, from 600 to 700 nm, and from 750 to 850nm.

Further, the present invention provides a method of forming an image on the optical recording medium which comprises recording the visible image on the image-recording layer.

### DETAILED DESCRIPTION OF THE INVENTION

The optical recording medium according to the present invention is an optical recording medium having: an information-recording layer, which is capable of recording and reproducing information by irradiation of a laser beam; and a visible image-recording layer, where a visible image is recorded on the opposite side of the optical recording medium to the information-recording layer. The image-recording layer contains a dye as the primary component and has a light absorption maximum in the wavelength region of 450 to 650 nm and an absorbance of 0.05 or more to at least one laser beam in wavelength regions of 350 to 450 nm, 600 to 700 nm, or 750 to 850 nm.

Hereinafter, the optical recording medium according to the invention and the image-recording method will be described.

The optical recording medium according to the invention may be any kind of medium among read-only, recordable, rewritable, and other media, but is preferably a recordable medium. In addition, the recording method is not particularly limited and may be phase-transition recording, photomagnetic recording, or dye-assisted recording, but is preferably dye-assisted recording.

Favorable layer structures of the optical recording medium according to the invention are the following:
(1) In a first embodiment, the optical recording medium has a structure wherein a recording layer, a reflection layer, and an adhesive layer are formed on a substrate in that order and further an image-recording layer and a dummy substrate are formed on the adhesive layer;
(2) In a second embodiment, the optical recording medium has a structure wherein a recording layer, a reflection layer, a protective layer, and an adhesive layer are formed on a substrate in that order, and further an image-recording layer and dummy substrate are formed on the adhesive layer;
(3) In a third embodiment, the optical recording medium has a structure wherein a recording layer, a reflection layer, a protective layer, an adhesive layer, and a protective layer are formed on a substrate in that order, and further an image-recording layer and a dummy substrate are formed on the second protective layer;
(4) In a fourth embodiment, the optical recording medium has a structure wherein a recording layer, a reflection layer, a protective layer, an adhesive layer, a protective layer, and a reflection layer are formed on a substrate in that order, and further an image-recording layer and a dummy substrate are formed on the second reflection layer; and
(5) In a fifth embodiment, the optical recording medium has a structure wherein a recording layer, a reflection layer, an adhesive layer, and a reflection layer are formed on a substrate in that order, and further an image-recording layer and a dummy substrate are formed on the second reflection layer.

In more detail, one surface (namely, a recording-and-reproducing surface) of the recording layer of the optical recording medium of the invention is capable of recording and reproducing information by irradiation with a laser beam. The image-recording layer of the optical recording medium of the invention is formed on the opposite side of the recording layer from the recording-and-reproducing surface.

The layer structures above (1) to (5) are indicated here only as examples, and the order of the layers in the layer structures is not limited to those described above and the layers may be exchanged. Alternatively, some layers may be eliminated. In addition, each layer may be composed of a single layer or multiple layers.

Hereinafter, the substrate and each layer will be described separately.

### Image-recording layer

As described above, the optical recording medium according to the invention has an image-recording layer, having a dye as the primary component, formed on the opposite side of the optical recording medium to the information-recording layer. The phrase "having a dye as the primary component" means that the content of the dye is 80 % by weight or more with respect to the total solid content of the image-recording layer.

Visible images (image information) desired by users, such as characters/letters, graphics, and pictures are recorded on the image-recording layer. Examples of visible images include: the title of the disc; content information; thumbnails of the content; related pictures; pictures for design of the disc; copyright information; recording date; recording method; and recording format.

The only requirement of the image-recording layer is to be able to record visible information such as character, image, and picture thereon. In the first embodiment of the invention, two dyes with different absorption wavelengths are used and in the second embodiment of the invention a dye having multiple absorption wavelength peaks is used. The first embodiment is described first. In the first embodiment, a dye having an absorption maximum in the light wavelength region of 450 to 650 nm (hereinafter, referred to as "dye A") and a dye having an absorbance of 0.05 or more to a laser beam having a wavelength in at least one of the regions 350 to 450 nm, 600 to 700 nm, or 750 to 850nm (hereinafter, referred to as "dye B") are used. Dye A

Dye A above has an absorption maximum in the light wavelength region of 450 to 650 nm. Thus, dye A absorbs light in the visible light region, and thus the image-recording layer appears darkened in the presence of dye A. The only requirement is that dye A should have an absorption maximum in the light wavelength region of 450 to 650 nm, and it may or may not have absorption in other wavelength regions.

Typical examples of dye A include cyanine dyes, phthalocyanine dyes, imidazoquinoxaline dyes, pyrylium-thiopyrylium dyes, azulenium dyes, squarylium dyes, metal complex dyes such as those of Ni and Cr, naphthoquinone dyes, anthraquinone dyes, indophenol dyes, indoaniline dyes, triphenylmethane dyes, merocyanine dyes, oxonol dyes, and aminium dyes. Among these, cyanine dyes, phthalocyanine dyes, metal complex dyes , merocyanine dyes, and oxonol dyes are used particularly favorably. Dye B

Dye B has an absorbance of 0.05 or more to a laser beam having a wavelength in at least one of the regions 350 to 450 nm, 600 to 700 nm, or 750 to 850 nm.

When an image is recorded by irradiation with a laser beam having a wavelength in the absorption wavelength region of dye B, dye B absorbs the laser beam and generates heat by photothermal conversion, which in turn decomposes dye A together with dye B, decreasing the absorption of the light in the visible region. As a result, the incident light on the region where the image has been recorded reaches to the reflection layer and is reflected by the reflection layer appearing bright. This leads to an increase in the difference between dark areas and bright areas, in contrast, between the unrecorded regions and the recorded regions respectively.

Depending on the wavelength of the laser beam used for recording on and reproduction from the recording layer, dye B should have an absorbance of 0.05 or more of a laser beam having a wavelength in at least one of the regions 350 to 450 nm, 600 to 700 nm, or 750 to 850 nm. However it may have absorption of laser beams in two of these regions or to laser beams in all of the three wavelength regions. In any of these cases, dye B decomposes by irradiation with a laser beam in the corresponding wavelength region. If the absorbance of the laser beam is less than 0.05 the dye is not broken down and hence it is not effective in producing a high contrast of the image-recording layer.

Typical examples of dye B include cyanine dyes, phthalocyanine dyes, imidazoquinoxaline dyes, pyrylium-thiopyrylium dyes, azulenium dyes, squarylium dyes, metal complex dyes such as those of Ni and Cr, naphthoquinone dyes, anthraquinone dyes, indophenol dyes, indoaniline dyes, triphenylmethane dyes, merocyanine dyes, oxonol dyes, and aminium dyes. Among these, cyanine dyes, phthalocyanine dyes, metal complex dyes, merocyanine dyes, oxonol dyes, and ultraviolet absorbents are used particularly favorably.

Dyes applicable to the desired recording laser wavelength can be prepared, for example, by changing the length of the conjugation system of the dyes. That is, for example, when a laser beam at a wavelength of 750 to 850 nm is used for recording, a dye having a methine chain length of 5 to 7 is preferably as the cyanine or merocyanine dye, while a dye having a methine chain length of 7 to 9 is preferably as the oxonol dye.

Alternatively, when a laser beam having a wavelength of 600 to 700 nm is used for recording, for example, a dye having a methine chain length of 3 to 5 is preferably as the cyanine or merocyanine dye, while a dye having a methine chain length of 5 to 7 is preferably as the oxonol dye.

Also, when a laser beam having a wavelength of 350 to 450 nm is used for recording, an ultraviolet absorbent or a near-ultraviolet absorbent may be used, but a dye from the above having a secondary absorption band in this laser wavelength region is favorably used.

Favorable examples of combinations of dyes A and B include: cyanine and cyanine dyes; oxonol and oxonol dyes; metal complex and metal complex dyes; cyanine and oxonol dyes; cyanine and metal complex dyes; cyanine and phthalocyanine dyes; oxonol and cyanine dyes; oxonol and metal complex dyes; oxonol and phthalocyanine dyes; and the like.

The ratio of dye A to dye B (mass ratio) is preferably between 99:1 to 1:99, more preferably between 95:5 to 30:70, and still more preferably between 90: 10 to 40:60.

In the second embodiment of the optical recording medium according to the invention, a dye having both of the absorption wavelength characteristics of dyes A and B of the first embodiment (hereinafter, referred to as "dye C") is used. Thus dye C, to be contained in the image-recording layer of the second embodiment, has an absorption maximum in the light wavelength region of 450 to 650 nm and an absorbance of 0.05 or more to a laser beam having a wavelength in at least one of the regions 350 to 450 nm, 600 to 700 nm, or 750 to 850 nm.

A dye having a visible light absorbance spectrum wherein a tail region of the absorption spectrum thereof reaches to the recording laser wavelength may be used as dye C in the second embodiment. Alternatively, a combination dye of a cationic dye and an anionic dye may also be used. Examples of such dyes include combination dyes of a cyanine-based cationic dye and a metal complex anionic dye.

The visible image to be recorded in the image-recording layer means an image visually recognizable, and examples thereof include all visually recognizable information such as any characters/letters (lines), picture, and graphics. Examples of character/letter information include authorised user identification information, expiration date information, designated allowable number of times of use information, rental information, resolution-specifying information, layer-specifying information, user-specifying information, copyright holder information, copyright number information, manufacturer information, production date information, sales date information, dealer or seller information, usage set-number information, area identification information, language-specifying information, application-specifying information, product user information, and usage number information.

The image-recording layer can be formed by preparing a coating solution by dissolving the above dye in a solvent and applying the coating solution on a substrate. The same solvents as those used for preparation of the coating solution for recording layer, described below, can be used. Other additives, application method, and the like can be the same as those for the recording layer described below.

The thickness of the image-recording layer is preferably 0.01 to 200 µm, more preferably 0.05 to 100 µm, and still more preferably 0.1 to 50 µm.

### Recording layer

The recording layer, a layer wherein coded information such as digital information (coded information) is recorded, is not particularly limited, and examples thereof include dye-containing, recordable, phase-transition, photomagnetic, and other layers, but the recording layer is preferably a dye-containing layer.

Typical examples of the dyes contained in the dye-containing recording layer include cyanine dyes, oxonol dyes, metal complex dyes, azo dyes, and phthalocyanine dyes.

In addition, the dyes described in JP-A Nos. 4-74690, 8-127174, 11-53758, 11-334204, 11-334205, 11-334206, 11-334207, 2000-43423, 2000-108513, and 2000-158818 and others are used favorably.

Further, the recording material is not restricted to a dye, and organic compounds such as triazole compounds, triazine compounds, oxonol compounds, cyanine compounds, merocyanine compounds, aminobutadiene compounds, phthalocyanine compounds, cinnamic acid compounds, viologen compounds, azo compounds, oxonol benzoxazole compounds, and benzotriazole compounds may also be used favorably. Among these compounds, oxonol compounds, cyanine compounds, aminobutadiene compounds, benzotriazole compounds, and phthalocyanine compounds are used particularly favorably.

The recording layer is formed by preparing a coating solution by dissolving the recording material such as dye, with a binder, and the like in a suitable solvent, then forming a coated layer by applying the coating solution onto a substrate, and drying. The concentration of the recording material in the coating solution for recording material is generally in the range of 0.01 1 to 15 % by weight, preferably in the range of 0.1 to 10 % by weight, more preferably in the range of 0.5 to 5 % by weight, and particularly preferably in the range of 0.5 to 3 wt %.

The recording layer can be formed, for example, by vapor deposition, sputtering, CVD, or solvent application, but solvent application is preferable. In such a case, application is carried out by preparing a coating solution by dissolving the dye and the like together with, as required, a quencher, a binder, or the like in a solvent. Then a coated layer is formed by applying the coating solution onto a substrate surface, and drying.

Examples of solvents for the coating solution include: esters, such as butyl acetate, ethyl lactate, and cellosolve acetate; ketones, such as methylethylketone, cyclohexanone, and methylisobutylketone; chlorinated hydrocarbons such as dichloromethane, 1,2-dichloroethane, and chloroform; amides such as dimethylformamide; hydrocarbons such as methylcyclohexane; ethers such as dibutylether, diethylether, tetrahydrofuran, and dioxane; alcohols such as ethanol, n-propanol, iso-propanol, n-butanol, and diacetone alcohol; fluorochemical solvents such as 2,2,3,3-tetrafluoropropanol; and glycol ethers such as ethylene glycol monomethylether, ethylene glycol monoethylether, and propylene glycol monomethylether.

With consideration to the solubility of dyes used, the solvents above may be used alone or in combinations of two or more. The coating solution may further contain various additives such as antioxidant, UV absorbent, plasticizer, and lubricant according to the intended use.

Examples of binders, when used, include: natural organic polymers, such as gelatin, cellulose compounds, dextran, rosins, and rubbers; and synthetic organic polymers, including hydrocarbon resins such as polyethylene, polypropylene, polystyrene, and polyisobutylene, vinyl resins such as polyvinyl chloride, polyvinylidene chloride, and polyvinyl chloride-polyvinyl acetate copolymers, acrylic resins such as polymethyl acrylate and polymethyl methacrylate, initial condensates of thermosetting resins such as polyvinyl alcohol, chlorinated polyethylene, epoxy resin, butylal resin, rubber compounds, and phenol-formaldehyde resin.

If a binder is used jointly as the material for recording layer, the amount of the binder used is generally in the range of 0.01 to 50 times and preferably 0.1 to 5 times the weight of dye.

Methods of the solvent application include spraying, spin coating, dipping, roll coating, blade coating, doctor roll coating, and screenprinting. The recording layer may be either a single layer or multiple layers. The thickness of the recording layer is generally in the range of 10 to 500 nm, preferably in the range of 15 to 300 nm, and more preferably in the range of 20 to 150 nm.

The recording layer may contain various discoloration inhibitors for improvement of the light fastness of the recording layer. Commonly, a singlet-oxygen quencher is used as the discoloration inhibitor. Any known singlet oxygen quencher described in literature, including patent specifications, may be used. Typical examples thereof include those described in JP-A Nos. 58-175693, 59-31194, 60-18387, 60-19586, 60-19587, 60-35054, 60-36190, 60-36191, 60-44554, 60-44555, 60-44389, 60-44390, 60-54892, 60-47069, 68-209995, and 4-25492, Japanese Patent Application Publication Nos. 1-38680 and 6-26028, German Patent. No. 350399, and Nippon Kagakukaishi JP, Oct. 1992, p.1141, and others.

The amount of the discoloration inhibitor such as the singlet oxygen quencher is usually in the range of 0.1 to 50 % by weight, preferably in the range of 0.5 to 45 % by weight, more preferably in the range of 3 to 40 % by weight, and particularly preferably in the range of 5 to 25 % by weight relative to the weight of the dye.

Typical examples of the materials for a phase-transition recording layer include: Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, and Ag-Ge-In-Sb-Te alloy. Among them, Ge-Sb-Te and Ag-In-Sb-Te alloys are preferable, as the layers thereof are re-recordable a great number of times.

The thickness of the phase-transition recording layer is preferably 10 to 50 nm and more preferably 15 to 30 nm.

The phase-transition recording layer above can be formed, for example, by gas-phase thin film deposition methods such as sputtering and vacuum deposition.

### Substrate

The substrate for the optical recording medium according to the invention may be selected from various materials hitherto used as the substrates for conventional optical recording media.

Examples of the substrate materials include glass, acrylic resins such as polycarbonate and polymethyl methacrylate, polyvinyl chlorides such as polyvinyl chloride and vinyl chloride copolymers, epoxy resins, amorphous polyolefins and polyesters, and these resins may be used in combination if desired.

These materials may be used in the film shape or the rigid plate shape. Among the materials above, polycarbonate is preferable from the perspective of humidity resistance, dimensional stability, and cost.

The thickness of the substrate is preferably 0.1 to 1.2 mm and more preferably 0.2 to 1.1 mm. Use of substrates whereon grooves having a track pitch narrower than that of conventional CD-R or DVD-R products is preferable for increasing the recording density. In this case, the track pitch of the groove is preferably in the range of 200 to 400 µm and more preferably in the range of 250 to 350 nm. The depth of groove (groove depth) is preferably in the range of 20 to 150 nm and more preferably in the range of 50 to 100 nm.

In addition, the width of the groove is preferably in the range of 50 to 250 nm and more preferably in the range of 100 to 200 nm. The tilt angle of the groove is preferably in the range of 20 to 80° and more preferably in the range of 30 to 70°.

An undercoat layer may be formed on the surface of the substrate whereon a recording layer is formed (on the face whereon grooves are formed), for improving the planarity and adhesiveness, and preventing deterioration of the recording layer.

Examples of materials for the undercoat layer include polymer materials such as polymethyl methacrylate, acrylic acid-methacrylic acid copolymers, styrene-maleic anhydride copolymers, polyvinyl alcohol, N-methylol acrylamide, styrene-vinyl toluene copolymers, chlorosulfonated polyethylene, nitrocellulose, polyvinylchloride, chlorinated polyolefin, polyester, polyimide, vinyl acetate-vinyl chloride copolymers, ethylenevinyl acetate copolymers, polyethylene, polypropylene, and polycarbonate; and surface modification agents such as silane coupling agent. The undercoat layer can be prepared by preparing a coating solution by dissolving or dispersing the materials in a suitable solvent, and applying the coating solution onto a substrate surface by, for example, a suitable application method such as spin coating, dip coating, or extrusion coating.

The thickness of the undercoat layer is generally in the range of 0.005 to 20 µm and preferably in the range of 0.01 to 10 µm. Reflection layer

A reflection layer is sometimes formed adjacent to the recording layer for improvement of reflectance during reproduction of information. The light-reflecting material used for the reflection layer is a material having a higher reflectance of laser beam, and examples thereof include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, and stainless steel. These materials may be used alone, in combinations of two or more, or as alloys. Among these materials, preferable are Cr, Ni, Pt, Cu, Ag, Au, Al and stainless steel. More preferable are metals and alloys of Au, Ag, and Al, and particularly preferable are metals and alloys of Ag and Al. The reflection layer is formed on the substrate or recording layer, for example, by vapor deposition, sputtering, or ion plating of a light-reflecting material. The thickness of the reflection layer is generally in the range of 10 to 300 nm and preferably in the range of 50 to 200 nm. Adhesive layer

The adhesive layer is any layer formed for improving the adhesiveness between the reflection layer and a dummy substrate.

A photo-curing resin is preferable as the material for the adhesive layer, and in particular, a photo-curing resin without significant curing shrinkage is preferable for prevention of disc warping. The photo-curing resins are, for example, UV-curing resins (UV-curing adhesive) such as "SD-640" and "SD-347" (trade names, manufactured by Dainippon Ink and Chemicals, Inc.). The thickness of the adhesive layer is preferably in the range of 1 to 1,000 µm, more preferably in the range of 5 to 500 µm, and particularly preferably in the range of 10 to 100 µm for providing the layer with elasticity. Dummy substrate

The same materials as those for the substrate may be used for the dummy substrate (protective substrate).

Hereinafter, the protective layers used in other embodiments will be described.

### Protective layer

A protective layer may be formed for physical and chemical protection of the reflection layer or the recording layer.

When two recording media having a the structure similar to that of DVD-R optical recording media, i.e., two substrates (including when one of them is a dummy substrate) are adhered to each other with the recording layers inside, it is not always necessary to form a protective layer.

Examples of materials for use in the protective layer include: inorganic materials such as ZnS, ZnS-SiO₂, SiO, SiO₂, MgF₂, SnO₂, and Si₃N₄; and organic materials such as thermoplastic resins, thermosetting resins, and UV-curing resins. The protective layer can be formed on the reflection layer, for example, by laminating a film obtained by extrusion molding of a plastic material onto the reflection layer using an adhesive. Alternatively, the protective layer may be formed by other methods, examples including vacuum deposition, sputtering, or coating.

Alternatively, if a thermoplastic or thermosetting resin is used, the layer can also be formed by preparing a coating solution by dissolving the resin in a suitable solvent, applying the coating solution, and drying the coated film. If a UV-curing resin is used, the layer may be formed by using the resin as it is or preparing a coating solution by dissolving the resin in a suitable solvent, applying the coating solution, and curing the resin by UV ray irradiation. The coating solution may further contain various additives such as antistatic agent, antioxidant, and UV absorbent according to the application. The thickness of the protective layer is generally in the range of 0.1 µm to 1 mm.

In another embodiment, for example, a reflection layer, a recording layer, and a cover layer may be formed on a substrate in that order. Such a cover layer is preferably formed on the recording layer attached via an adhesive layer. In such a case, the layers other than the cover layer are the same as described above. Cover layer

The cover layer, which is formed for preventing impact or the like to the internal layers of the optical recording medium, is a transparent material which is not particularly limited, but preferably is polycarbonate, cellulose triacetate, or the like. More preferably it is a material having a moisture absorption coefficient of 5% or less at 23°C and 50% RH.

The term "transparent" means that the material is translucent enough to allow transmission of the recording and the reproduction light (transmittance: 90% or more).

The cover layer can be formed, for example, in the following way. A coating solution can be prepared, by dissolving a photo-curing resin for the adhesive layer in a suitable solvent and then a coated layer formed, by applying the coating solution onto the recording layer at a predetermined temperature. Then onto the coated film layer, for example, a cellulose triacetate film (TAC film), obtained by extrusion molding of a plastic material can be laminated. Curing of the coated film can then be accomplished by photoirradiation through the laminated TAC film. A TAC film containing an ultraviolet absorbent is favorable for such a film. The thickness of the transparent sheet is preferably in the range of 0.01 to 0.2 mm, more preferably in the range of 0.03 to 0.1 mm, and still more preferably in the range of 0.05 to 0.095 mm.

Alternatively, a polycarbonate sheet, for example, may be used as a cover sheet. When an adhesive is attached to the bonding surface of the transparent sheet, there is no need for the above adhesive.

Alternatively, a light-transmitting layer, for example, of an ultraviolet-curing resin may be formed replacing the cover layer.

In addition, a hardcoat layer may be formed on the cover layer. The hardcoat layer can be formed by forming, a reflection layer, a recording layer, and the like on a substrate, forming a cover layer over these layer, and further forming the hardcoat layer on the cover layer, for example, by application. When the cover layer is a transparent sheet, the optical recording medium according to the invention may be prepared by forming a hardcoat layer on the transparent sheet before laminating the transparent sheet onto the recording layer. The transparent sheet can then be laminated onto the recording layer, placing the hardcoat layer on the outer surface.

In a case where the recording medium of the invention is capable of recording and reproducing information by irradiation with a laser beam having a wavelength of 500 nm or less, the recording medium may have a layer constitution in which a recording layer and a cover layer are sequentially formed on or above one surface of a substrate, and an image-recording layer and a cover layer are sequentially formed on or above the opposite surface of the substrate. Specifically, the recording medium of the invention may have a layer constitution in which a reflection layer, a recording layer, a barrier layer, an adhesive layer, and a cover layer are sequentially formed on or above one surface of a substrate, and a reflection layer, an image-recording layer, a barrier layer, an adhesive layer, and a cover layer are sequentially formed on or above the opposite surface of the substrate.

As described above, the optical recording medium according to the invention may be applied to so-called play-back only optical recording media that have a recording area (pit) where information reproducible by laser beam is recorded. Image-recording method

The image-recording method according to the invention is a method of recording an image on the image-recording layer of the optical recording medium according to the invention. This image-recording method employs a laser beam for recording a visible image on the image-recording layer, the wavelength of which is identical to that of the laser beam used for recording information on the recording layer.

The image-recording method according to the invention employs an optical recording medium according to the invention, and a recording device that is capable of recording information on the image-recording layer of the optical recording medium according to the invention.

The image-recording method according to the invention, which records an image on the image-recording layer by using the same laser beam as the laser beam used for recording on the recording layer, allows multi-functional use of a single laser source in one recording device. This minimizes the required hardware resources in the recording device and allows general users to record image easily by using the device.

Recording of an image on the image-recording layer of the optical recording medium according to the invention is most preferably carried out by using the image-recording method according to the invention. However image recording onto the image-recording layer of the optical recording medium according to the invention is not restricted to this image-recording method.

Hereinafter, the recording device for use in recording on the optical recording medium according to the invention will be described. Recording device

In the optical recording medium according to the invention, image recording on the image-recording layer and optical information recording on the recording layer thereof can be performed by using a single optical disk drive (recording device) capable of recording information on both layers. When only one optical disk drive is used in this manner, information is first recorded on either an image-recording layer or a recording layer and then, after the optical disk is reversed, the other layer. Optical disk drives allowing recording of visible images on the image-recording layer are described, for example, in JP-A Nos. 2003-203348 and 2003-242750, and others.

In addition, during visible image recording onto the image-recording layer, the recording device allows recording of a visible image by moving the laser pickup along the surface of the optical recording medium. Whilst doing this the laser beam is irradiated onto the image-recording layer, in sync with the relative displacement, while modulating the laser beam according to the image data to be recorded, such as characters/letters, graphics, or the like. Such recording devices are described, for example, in JP-A No. 2002-203321 and others.

Recording devices for recording optical information on the recording layer at least have a laser pickup emitting laser beam and a rotation mechanism for rotating the optical recording medium. The recording in the recording layer is reproduced by irradiating a laser beam onto the recording layer of the rotating optical recording medium from the laser pickup. The configuration of such recording devices is known in the art.

Recording of information (digital information) on the recording layer will be described next. When the recording layer is a dye-containing layer, a laser beam is first irradiated from a laser pickup onto an unrecorded optical recording medium which is rotating at a certain recording linear velocity. As the dye in the recording layer absorbs the irradiated light, resulting in local heating of the layer, which in turn generates desirable voids (pits) therein, causing changes in the optical properties, resulting in the recording of information.

For the generation of one pit the laser beam may have a recording waveform of a pulse train or single pulse. The ratio of the length of the information to be actually recorded (pit length) is important.

The pulse width of the laser beam is preferably in the range of 20 to 95%, more preferably in the range of 30 to 90%, and still more preferably in the range of 35 to 85% with respect to the length of the information to be actually recorded. If the recording waveform is a pulse train, then the width of the combination wave of the pulse train should be in the ranges above.

The output of the laser beam may vary according to the recording linear velocity, and is preferably in the range of 1 to 100 mW, more preferably in the range of 3 to 50 mW, and still more preferably in the range of 5 to 20 mW when the recording linear velocity is 3.5 m/s. Alternatively, when the recording linear velocity is increased to double the above, the preferable ranges of the laser beam output becomes 2^{1/2} times greater.

The NA of the objective lenses that are used in the pickup, in order to improve recording density, is preferably 0.55 or more, and more preferably 0.60 or more.

In the invention, a semiconductor laser having an emission wavelength in the range of 350 to 850 nm may be used as the recording light.

Hereinafter, recording devices for the optical recording media wherein the recording layer is a phase transition layer will be described. When the recording layer is a phase transition layer, the recording layer composed of the materials described above repeated phase transitions between the crystalline phase and the amorphous phase can be generated by laser beam irradiation.

During information recording, the phase-transition recording layer is locally melted by irradiation of a focused laser beam pulse for a short time period. The melted area is solidified by rapid cooling under heat diffusion, forming a recorded mark in the amorphous state. When the recorded information is being erased, the recorded mark in the amorphous state is recrystallized into the original unrecorded state by heating the recording layer to a temperature of less than the melting point but more than the crystallization temperature by irradiating with a laser beam and then cooling gradually.

### EXAMPLES

Hereinafter, the present invention will be described in detail with reference to the Examples, but it should be understood that the invention is not limited to these Examples.

### Example 1

This Example relates to a DVD-R optical recording medium composed of two discs. The method of preparing the optical recording medium will be described below.

A substrate of 0.6 mm in thickness and 120 mm in diameter having a spiral groove (depth: 130 nm, width: 300 nm, and track pitch: 0.74 µm) was prepared by injection molding of a polycarbonate resin. After preparation of a coating solution (1) by dissolving 1.5 g of the following dye (1) in 100 ml of 2,2,3,3-tetrafluoro-1-propanol, a recording layer was prepared by applying the coating solution (1) onto the grooved surface of the substrate by spin coating. Then, a reflection layer of silver having a film thickness of 120 nm was formed, by sputtering. Additionally a protective layer having a thickness of 10 µm was formed by coating an ultraviolet-curing resin (trade name: SD318, manufactured by Dainippon Ink and Chemicals, Inc.) onto the recording layer by spin coating and irradiating and then curing the UV-curing resin layer with ultraviolet light. The first disc was thus prepared, by the steps above.

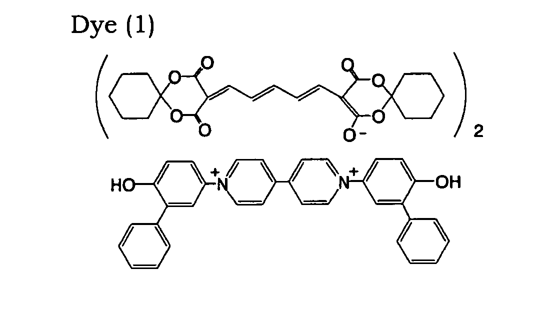

Subsequently, a coating solution (2) containing 0.75 g of dye (1) above (corresponding to dye A) and 0.75 g of the following dye (2) (corresponding to dye B) in 100 ml of 2,2,3,3-tetrafluoro-1-propanol was prepared. An image-recording layer was then formed, by applying the coating solution (2) onto a substrate of 0.6 mm in thickness and 120 mm in diameter by spin coating. Then, a reflection layer of silver having a film thickness of 120 nm was formed on the image-recording layer by sputtering. A protective layer having a thickness of 10 µm was then formed, by coating an ultraviolet-curing resin (trade name: SD318, manufactured by Dainippon Ink and Chemicals, Inc.) onto the recording layer by spin coating, and irradiating with ultraviolet light, thus curing the UV-curing resin layer. The second disc was thus prepared, by the steps above.

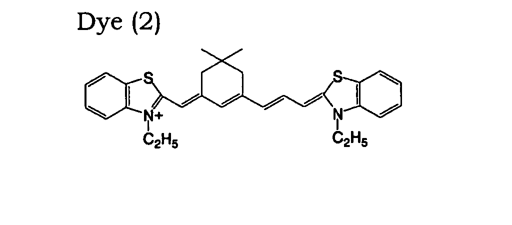

Subsequently, a composite disc was prepared by laminating the first disc and the second disc in the following steps. First, a slow-acting cation-polymerization adhesive (trade name: SDK7000, manufactured by Sony Chemicals Corp.) was applied onto the protective layers of the two discs by screen printing. The printing plate used in screen printing had a mesh size number of 300. Then, immediately after irradiation with ultraviolet light using a metal halide lamp, the first and second discs were laminated together by their protective layers, and the resulting disk was pressed from both sides for 5 minutes, to give an optical recording medium of Example 1.

The maximum absorption wavelength and the absorbance of dyes (1) and (2) are shown in Table 1.

**Table 1**

| | Maximum absorption wavelength (nm) | Absorbance (400 nm) | Absorbance (660 nm) | Absorbance (780 nm) |
|---|---|---|---|---|
| Dye (1) | 579 | 0.126 | 0.045 | 0.004 |
| Dye (2) | 816 | 0.158 | 0.314 | 0.345 |

### Comparative Example 1

An optical recording medium of Comparative Example 1 was prepared in a similar manner to Example 1, except that coating solution (1) was used for preparation of the image-recording layer in place of coating solution (2).

### Evaluation

The thus prepared optical recording media of Example 1 and Comparative Example 1 were evaluated by the following tests.

### Evaluation of contrast

### (1) Image recording with a DVD-R recording-reproduction wavelength (660 nm)

A semiconductor laser having a wavelength of 660 nm, as is used for reproduction of information in DVD-R was used. With it an image was recorded by irradiating a recording media with the focused laser ray, while moving the pickup mechanically under the conditions of a linear velocity of 3.5 m/s and a recording output of 8 mW. To convert the difference in contrast before and after recording into numerical values the reflectances before and after recording (wavelength 550 nm) were determined using a spectrophotometer (manufactured by Shimadzu Corporation). The measurement results are summarized in Table 2.

### (2) Image recording at a CD-R recording-reproduction wavelength (780 nm)

A semiconductor laser having a wavelength of 780 nm, as is used for recording-reproduction of CD-R, was used. With it an image was recorded by irradiating a recording media with the focused laser ray, while moving the pickup mechanically under the conditions of a linear velocity of 1.2 m/s and a recording output of 8 mW. To convert the difference in contrast before and after recording into numerical values the reflectances before and after recording (wavelength 550 nm) were determined using a spectrophotometer (manufactured by Shimadzu Corporation). The measurement results are summarized in Table 2.

**Table 2**

| | Recording wavelength 660 nm | | Recording wavelength 780 nm | |
|---|---|---|---|---|
| | Reflectance (wavelength 550 nm) | | Reflectance (wavelength 550 nm) | |
| | Before recording | After recording | Before recording | After recording |
| Example 1 | 12% | 24% | 12% | 20% |
| Comparative Example 1 | 12% | 15% | 12% | 12% |

As apparent from Table 2, when an image is recorded using a laser beam having a wavelength of 660 nm, the difference in reflectance before and after recording was an increase of 3% in Comparative Example 1. However under the same conditions the difference in Example 1 was an increase of 12%. This indicates that the contrast between the recorded and unrecorded regions was higher in Example 1. In addition, when an image is recorded by using a laser beam having a wavelength of 780 nm, there was no difference in reflectance before and after recording in Comparative Example 1. However under the same conditions the difference in Example 1 showed an increase of 8%, indicating that the contrast between the recorded and unrecorded regions is favorable in Example 1.

## Claims

1. An optical recording medium, comprising:
a substrate;
a recording layer formed on or above the substrate which is capable of recording and reproducing information by irradiation with a laser beam; and
an image-recording layer whereon a visible image is recordable, the image-recording layer being formed on the opposite side of the recording layer from the surface on which the irradiation with a laser beam is applied,
wherein the image-recording layer contains a dye as a primary component, having
an absorption maximum in a light wavelength region of 450 to 650 nm, and
an absorbance of 0.05 or more to at least one laser beam selected from the group consisting of laser beams having a wavelength in the regions from 350 to 450 nm, from 600 to 700 nm, and from 750 to 850nm.

2. An optical recording medium according to claim 1, wherein the image-recording layer contains dyes A and B, and
an absorption maximum of the dye A is a light wavelength which is in a range of 450 to 650nm, and
an absorbance of the dye B is 0.05 or more to least one laser beam selected from the group consisting of laser beams having wavelengths in the regions from 350 to 450 nm, from 600 to 700 nm, and from 750 to 850nm.

3. An optical recording medium according to claim 2, wherein the dye A is a dye selected from the group consisting of a cyanine dye, a phthalocyanine dye, a metal complex dye, a merocyanine dye, and an oxonol dye.

4. An optical recording medium according to claim 2, wherein the dye B is a dye selected from the group consisting of a cyanine dye, a phthalocyanine dye, a metal complex dye, a merocyanine dye, an oxonol dye, and an ultraviolet absorbent.

5. An optical recording medium according to claim 2, wherein a combination of the dyes A and B are selected from combinations of dyes in the group consisting of: a combination of a cyanine dye and a cyanine dye; a combination of an oxonol dye and an and oxonol dye; a combination of a metal complex dye and a metal complex dye; a combination of a cyanine dye and and an oxonol dye; a combination of a cyanine dye and a metal complex dye; a combination of a cyanine dye and a phthalocyanine dye; a combination of an oxonol dye and a cyanine dye; a combination of an oxonol dye and a metal complex dye; and a combination of an oxonol dye and a phthalocyanine dye.

6. An optical recording medium according to claim 2, wherein an amount ratio by weight of the dye A to dye B contained in the image recording layer is in a range from 90:10 to 40:60.

7. An optical recording medium according to claim 1, wherein the recording layer contains a dye as a recording material.

8. An optical recording medium according to claim 1, wherein the recording layer contains an organic compound selected from the group consisting of an oxonol compound, a cyanine compound, an aminobutadiene compound, a benzotriazole compound, and a phthalocyanine compound, as a recording material.

9. An optical recording medium according to claim 1, wherein the image-recording layer contains a dye C, that has
an absorption maximum in a light wavelength region of 450 to 650nm, and
an absorbance of 0.05 or more to at least one laser beam selected from the group consisting of laser beams having a wavelength in the regions of from 350 to 450 nm, from 600 to 700 nm, and from 750 to 850nm.

10. An optical recording medium according to claim 1, wherein the substrate comprises polycarbonate.

11. An optical recording medium according to claim 1, wherein a reflection layer is formed adjacent to the recording layer.

12. A method of forming an image on an optical recording medium which comprises recording a visible image on an image-recording layer,
the optical recording medium comprising:
a substrate;
a recording layer formed on or above the substrate which is capable of recording and reproducing information by irradiation with a laser beam; and
the image-recording layer whereon the visible image is recordable, the image-recording layer being formed on the opposite side of the recording layer from the surface on which the irradiation with a laser beam is applied,
wherein the image-recording layer contains a dye as a primary component, having
an absorption maximum in a light wavelength region of 450 to 650 nm, and
an absorbance of 0.05 or more to at least one laser beam selected from the group consisting of laser beams having a wavelength of the regions from 350 to 450 nm, from 600 to 700 nm, and from 750 to 850nm, and
wherein a wavelength of the laser beam used for recording of the visible image on the image-recording layer is identical to a wavelength of the laser beam used for recording on the recording layer.
